# EUROPEAN PATENT SPECIFICATION

(11) **EP 3 963 875 B1**
(45) Date of publication and mention of the grant of the patent: **02.04.2025**
(21) Application number: 20721243.2
(22) Date of filing: 29.04.2020
(51) Int. Cl.: H04N 1/405

(54) **RASTER IMAGE PROCESSOR**
RASTERBILDPROZESSOR
PROCESSEUR D'IMAGES DE TRAME

(30) Priority: 30.04.2019 EP 19171934
(43) Date of publication of application: 09.03.2022
(73) Proprietor: ECO3 BV, 2640 Mortsel (BE)
(72) Inventor: BARTELS, Rudolf, 2640 Mortsel (BE)
(74) Representative: De Clercq & Partners
(86) International application number: PCT/EP2020/061846
(87) International publication number: WO 2020/221788

(56) References cited:
- EP-A1- 3 461 116
- EP-A2- 2 129 100
- WO-A1-2019/081493
- US-A- 5 808 622
- US-A1- 2008 123 146

## Description

### Technical Field

The invention relates to the field of raster image processors (RIP) for digital halftoning continuous tone images and printing images, in particular by means of lithographic or flexographic printing presses.

### Background Art

Printing presses and digital printers cannot vary the amount of ink or toner that is applied to particular image areas except through digital halftoning, also called dithering or screening. Digital halftoning is the process of rendering the illusion of a continuous-tone image with a number of dots, also called halftone dots. The digital image produced by digital halftoning is called a halftone raster image or screen. Both multilevel and binary halftoning methods are known. The halftone dots produced by binary methods consist of pixels which represent image data and pixels which represent non-image data.

Binary digital halftoning is a well-known technique, which is explained in detail by Robert Ulichney in his book "Digital Halftoning", MIT Press, 1987, ISBN 0-262-21009-6, wherein chapter 5 about 'clustered-dot ordered dither' is background art for the present invention including the use of threshold tiles for rendering continuous-tone images.

Another overview of digital halftoning methods is disclosed in an article "Recent trends in digital halftoning", Proc. SPIE 2949, Imaging Sciences and Display Technologies, (7 February 1997); doi: 10.1117/12.266335 wherein also multilevel digital halftoning is explained.

Said digital halftoning methods are performed by a raster image processor, abbreviated as RIP. Said processor (RIP) converts electronic documents, mostly defined in a page description language (PDL), to a continuous-tone image (CT) and halftoning said image in a halftone raster image (RT) for printing. Well-known page description languages (PDL) are PostScript^{™} (PS) and 'Page Description Format' (PDF). Said processor is mostly a kernel in a prepress workflow system such as Apogee^{™} from manufacturer AGFA NV.

AM (amplitude modulated) screening is a widely used clustered-dot-ordered dithering technique wherein the size of the halftone dots is modulated in order to represent different densities of an image. Said halftone dots are regularly tiled according to a screen frequency and screen angle. An AM halftone dot is typically circular-, elliptical-, diamond- or square-shaped.

But also other types of regularly tiled halftone dots are recently available such as Concentric Screening from Esko^{™} as disclosed in US2007/0002384 wherein the halftone dots have a shape with one or more rings, or more recently multi clustered halftone dots as disclosed in EP3461116. But both involve complex mathematics and difficult calibration and can therefore not be implemented in the wide installed base of prepress workflow systems having a limited data memory and/or processing power.

Another type of regularly halftone dots are disclosed in application WO2019/081493 A1 (AGFA NV) , namely spiral halftone dots which may be implemented with a single threshold tile, such as in AM screening.

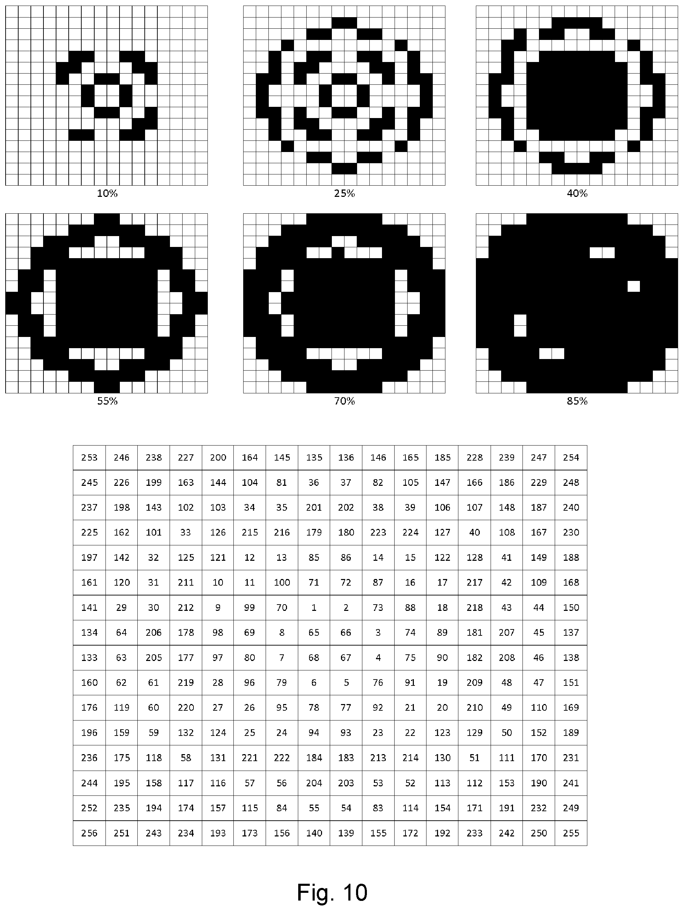

US2008123146 A1 (RICOH COMPANY LTD) discloses a dither matrix which is used in halftone processing for converting input image data having M input halftone levels into output image data having N (M>N>2) output halftone levels, thus for using a multilevel halftoning process. In Fig. 10 there are three of said half toning methods implemented in a raster image processor according the type of an image object in a document: a character dithering step for characters; a graphic dithering step for line and graphics and an error diffusion step for images.

The quality of printing is realized by controlling the halftoning processing in the raster image processor (RIP). But to realize high quality printing on a selected substrate, it is important to use an appropriate threshold tile for halfoning a continuous-tone image (CT). For a printing device capable of printing on a plurality of substrates (S₁, S₂,..., S_{M}), an operator selects a threshold tile for halftoning on the experience and his own sense depending on the to-be-printed substrate. However, the number of halftone dot shapes and their variances are recently growing as discussed above. When said number halftone dots shapes may be used by said processor, it occurs occasionally that an inappropriate halftone dot shape is selected for halftoning a continuous-tone image (CT) on a selected substrate (Sᵢ). This results that a printed image on the selected substrate is not provided as expected.

### Summary of invention

It is an object of the present invention to provide a raster image processor (RIP) for digital halftoning a continuous-tone image (CT) into a halftone raster image (RT) for a printing device which is capable of printing on a plurality of substrates (S₁, S₂,..., S_{M}). Said processor has several advantages such as providing a threshold selection method for selecting automatically a threshold tile which is appropriate for a selected substrate. Said selection makes it easier for the operator if the number of threshold tiles (TT₁, TT₂,... , TT_{N}) is large, especially when said threshold tiles determines a large number of halftone dot shapes including variances of said shapes and especially when said shapes including variances influences quality of printing seriously. N is hereby larger than 2.

This problem is solved by the method defined in claim 1 wherein said processor comprises an input field in which information regarding a substrate, preferably of said plurality of substrates, is to be used; a memory having stored thereon a plurality of threshold tiles (TT₁, TT₂,..., TT_{N}) for generating regularly tiled halftone dots; and a threshold selector which is capable to select said threshold tile (TT) of said plurality of threshold tiles (TT₁, TT₂,... , TT_{N}) based on information supplied to the input field. The selected threshold tile may be selected for example because it gives less patterns, less/more gloss, less ink usage and/or less shine-through when used for halftoning and representing a continuous-tone image on the selected substrate.

Said processor manages apparently in-memory-stored plurality of threshold tiles and selects from it the most effective threshold tile for a selected substrate. Said processors has also means for receiving the continuous-tone image (CT); and means for storing said continuous-tone image (CT) in another memory.

The regularly tiled halftone dots are preferably arranged according to a screen frequency larger than 100 lines per inch and more preferably according to a screen angle selected from a group consisting of 0°, 7.5°, 15°, 22.5°, 75°, 45°, 67.5° and 82.5°.

In a preferred embodiment said processor additionally comprises:
an ink-usage predictor; and wherein the threshold selector is capable to select the threshold tile (TT) based additionally on predicted amounts of ink from said ink-usage predictor; wherein said amounts are calculated from halftone raster images of the continuous tone image (CT) by threshold tiles of the plurality of threshold tiles (TT₁, TT₂,... , TT_{N}). Said amount may be described in millilitres but also in ink layer thickness.

Said ink-usage predictor is capable to predict amount of ink from a selected halftone raster image that shall be printed on a substrate. Said calculation is based on complex mathematics as disclosed further on in an example. The selection of the most effective threshold tile may be the one with the lowest prediction of amount of ink.

The kind of ink that is used for rendering a continuous-tone image influences also print quality for example inks that have to be cured or inks that have a high penetration in the selected substrate. If the printing device is capable of printing with a plurality of inks (I₁, I₂,..., I_{Q}), the raster image processor (RIP) preferably further comprises another input field in which information regarding an ink, preferably of said plurality of inks, is to be used; and wherein the threshold selector is capable of determining the threshold tile (TT) based additionally on information supplied to the other input field.

Said preferred processor manages in-memory-stored plurality of threshold tiles and selects from it the most effective threshold tile for a selected substrate combined with a selected ink.

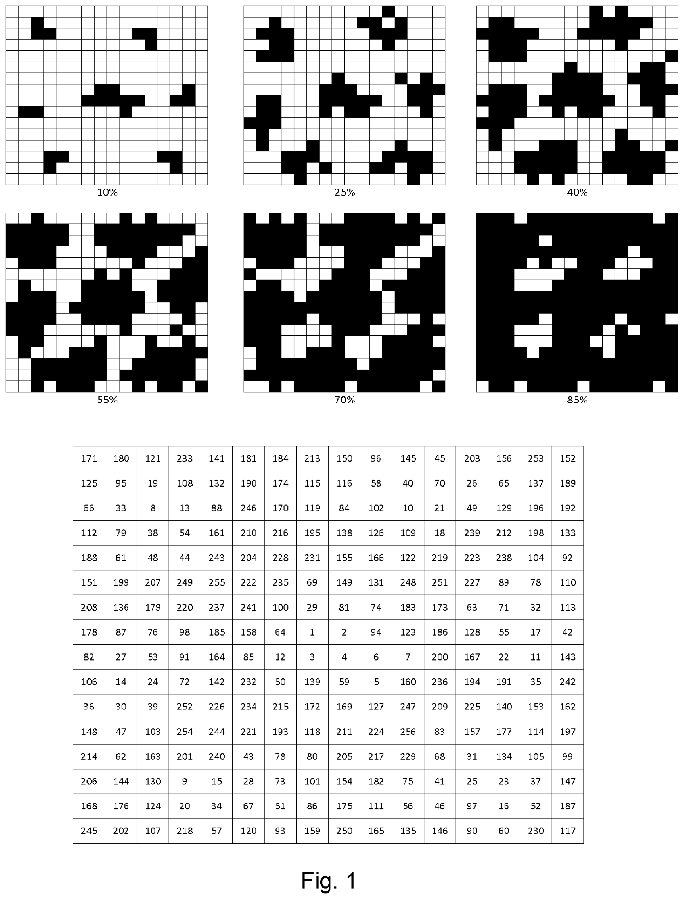

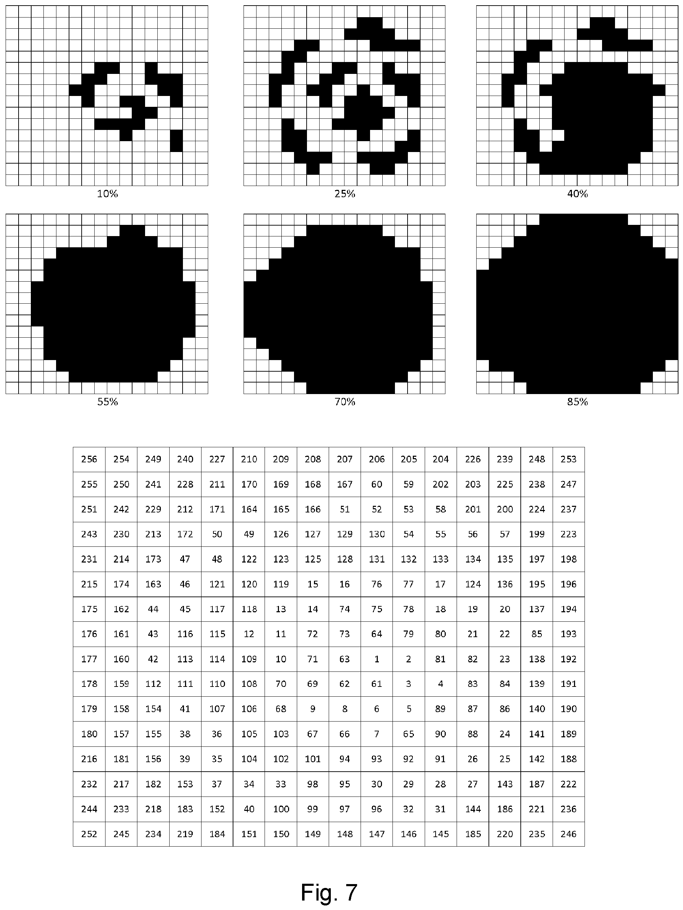

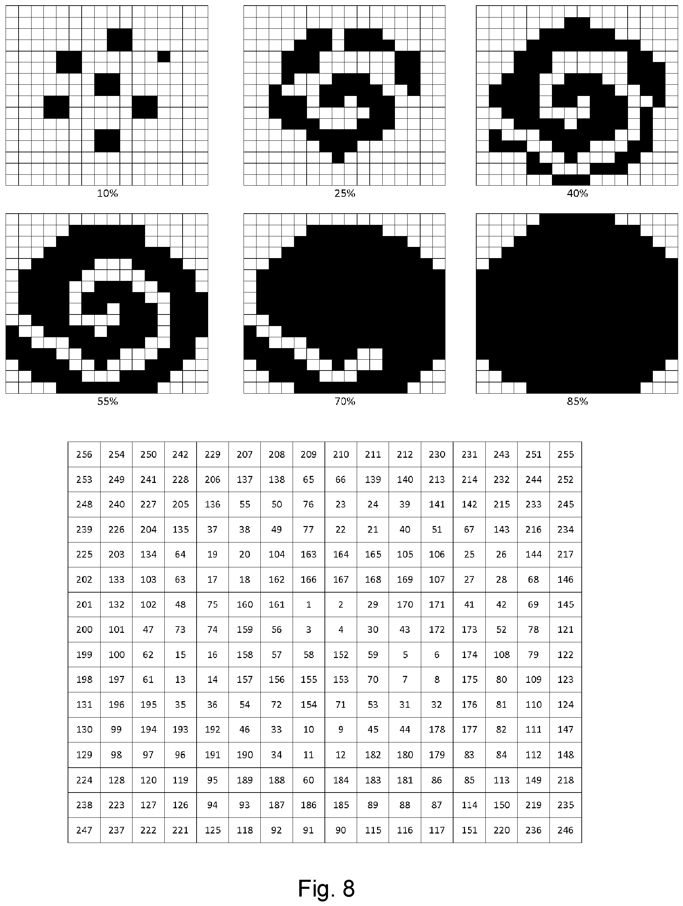

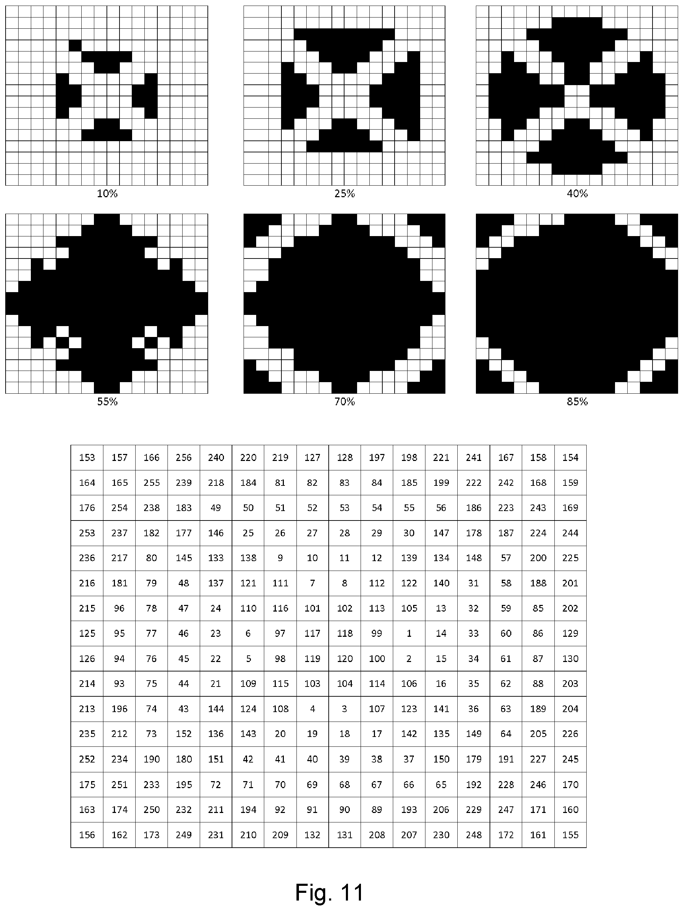

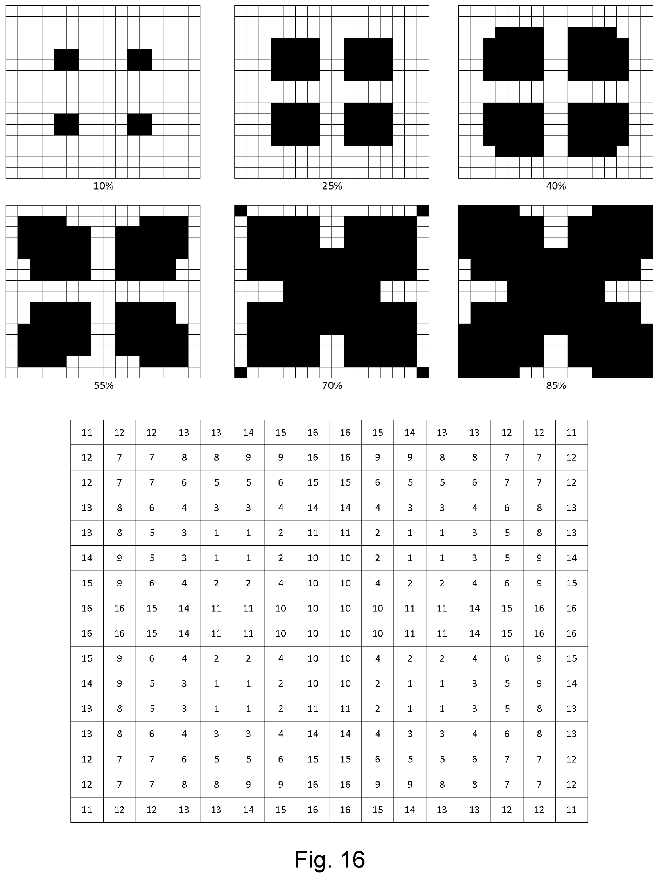

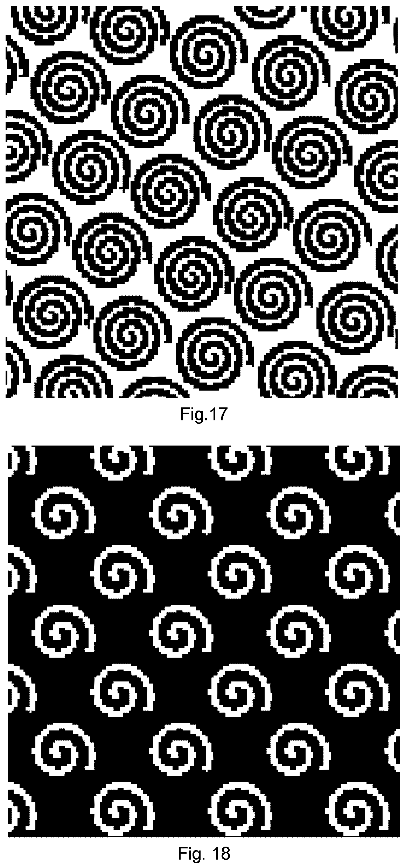

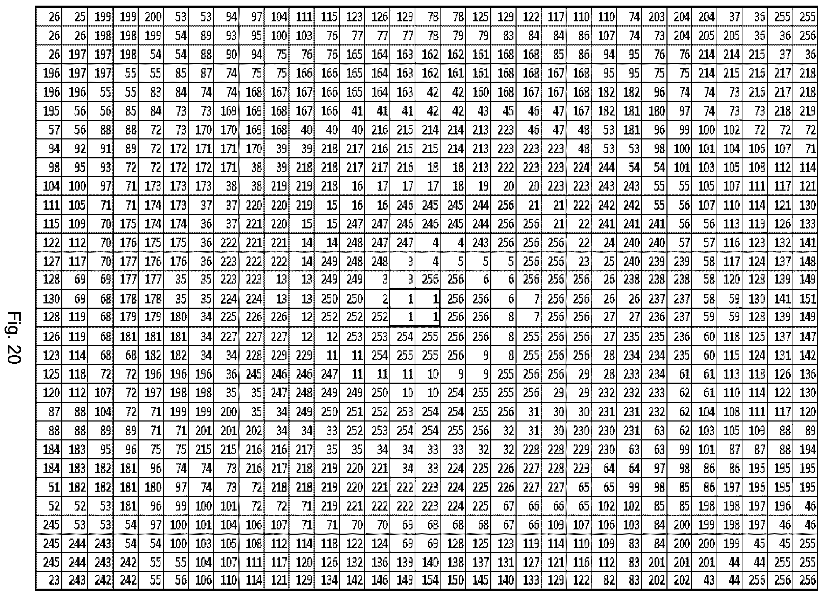

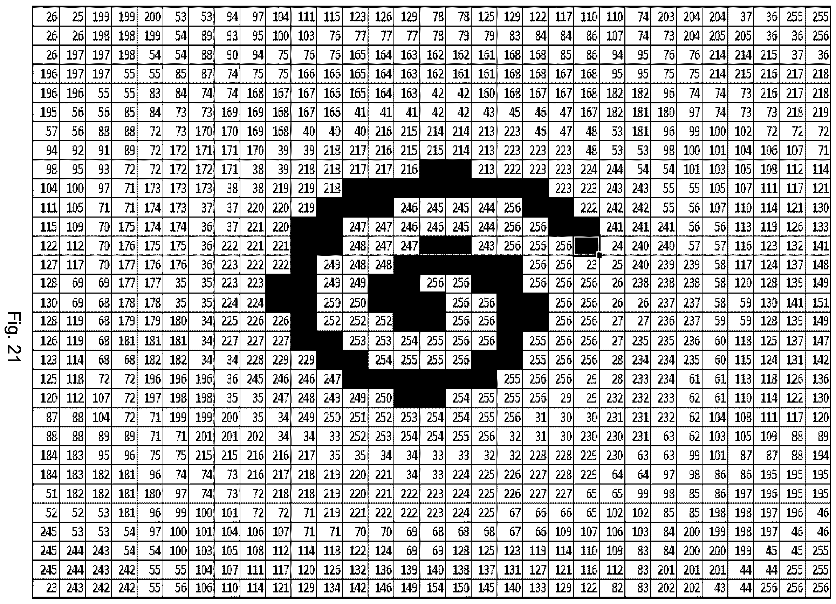

It is found that specific halftone dots may be varied more than AM screening to optimize the print quality on a selected substrate such as influencing the amount of ink. In a preferred embodiment said plurality of threshold tiles (TT₁, TT₂,... , TT_{N}) comprises
a) a set of threshold tiles for generating halftone images wherein at least a portion of all the halftone cells is a halftone dot comprises:
   (i) image pixels arranged as a first cluster or as a plurality of clusters which together represent a first path; and wherein said image pixels having a feed point (1003, 2003); and
   (ii) non-image pixels arranged as a second cluster or as a plurality of clusters which together represent a second path (= TYPE A, FIGs17-24); and/or
b) a set of threshold tiles for generating halftone images wherein at least a portion of all the halftone cells comprises at least 2 image clusters, image clusters being defined as mutually separated groups of more than 4 adjacent image pixels (= TYPE B, FIGs1-16).

The first path is preferably a space filling curve inside said halftone cell or said first path is a spiral for generating spiral halftone dots. Said spiral halftone dots and possible variants are also disclosed in PCT/EP2018/079011 (AGFA NV).

In a preferred embodiment the halftone cells of said portion have a quarter section which represents a relative image density which is at least twice the relative image density represented by the halftone cell as a whole, more preferably the portion comprises at least 10% of all the halftone cells having a relative image density of less than 50% or preferably the portion comprises at least 50% of all the halftone cells having a relative image density of less than 50%. The portion may comprise at least 4 image clusters.

The raster image processor is preferably used for halftoning a continuous-tone image (CT) by said processor into a halftone raster image (RT) by a selected threshold tile (TT) from the threshold selector.

### Brief description of drawings

FIG. 1 shows 6 halftone cells, each consisting of a 16x16 grid of pixels, in the upper half of the figure. These halftone cells were each generated by the same threshold array using the raster image processor of the present invention. Said threshold array is the matrix shown in the lower half of the figure. Each halftone cell represents another relative image density, as indicated by the dot percentage shown below each halftone cell. The image pixels are represented by the black areas in the figures, while the non-image pixels are represented by the white areas.
FIGs. 2 to 11 differ from FIG.1 only therein that another threshold array is used in each figure.
FIG. 12 shows 6 tiled halftone cells, each comprising 4 groups of 3x3 image pixels.
FIG. 13 and FIG. 14 show 6 tiled halftone cells which are identical to the 70% halftone cells in FIG. 3 and FIG. 4 respectively.
FIG. 15 shows a halftone cell which comprises 3 image clusters, designated by the dashed lines A-C; the image pixels designated d-h do not form a group of more than 4 adjacent pixels and therefore do not comply with the definition of an image cluster in accordance with the present invention.
FIG. 16 shows 6 halftone cells, each consisting of a 16x16 grid of pixels, in the upper half of the figure and the threshold array which was used to generate these cells in the lower half. The threshold values in the array range from 1 to 16, contrary to the values in FIGs. 1-11 which range from 1 to 256.
FIG.17 is an enlargement of a raster image which is a result by the present invention. The raster image comprises Archimedean spiral dots which have a 50% dot coverage and which are tiled regularly in a square grid.
FIG.18 is an enlargement of a raster image which is a result by the present invention. Said raster image comprises Archimedean spiral dots which have a 90% dot coverage and which are tiled regularly in a square grid.
FIG.19 represents multiple dot coverages produced by a threshold tile which is a result by the present invention.
FIG.20 and FIG. 21: FIG. 20 shows an example of a threshold tile comprising threshold values from 1 to 256, wherein said threshold tile may be comprised in the present invention. FIG. 21 shows the spiral dot that is generated by the threshold tile of FIG. 20 for a halftone dot having a threshold value of 22, which corresponds to a dot coverage of 8.6% (= 22/256).
FIG.22 shows four spiral dots which comprise
   (i) image pixels arranged as a first arc (200) as arc or as a plurality of arcs which together represent a first, clockwise rotating spiral (100) as spiral, and (ii) non-image pixels arranged as a second arc (201) as arc or as a plurality of arcs which together represent a second, clockwise rotating spiral (101) as another spiral. Said first arc and first spiral having a feed point, also called inner end (2003, 1003) and an outer end (2005, 1005).

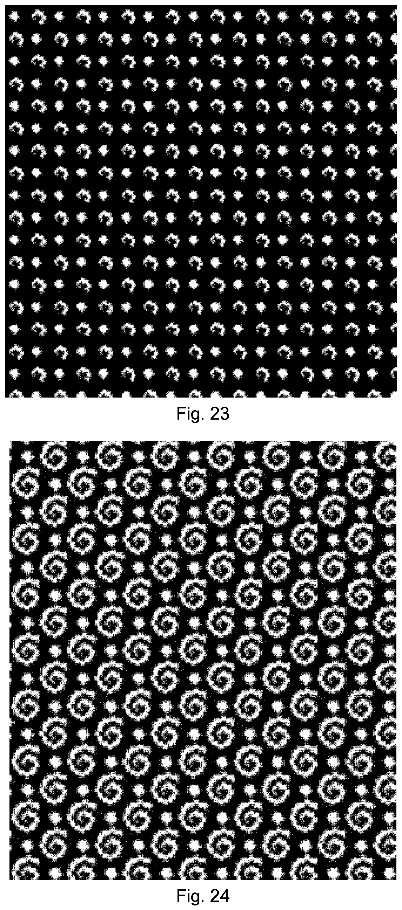

FIG. 23 and FIG.24: show an enlargement of a raster image generated by the invention comprising Archimedean spiral dots and additionally comprising arced halftone dots having non-image pixels.

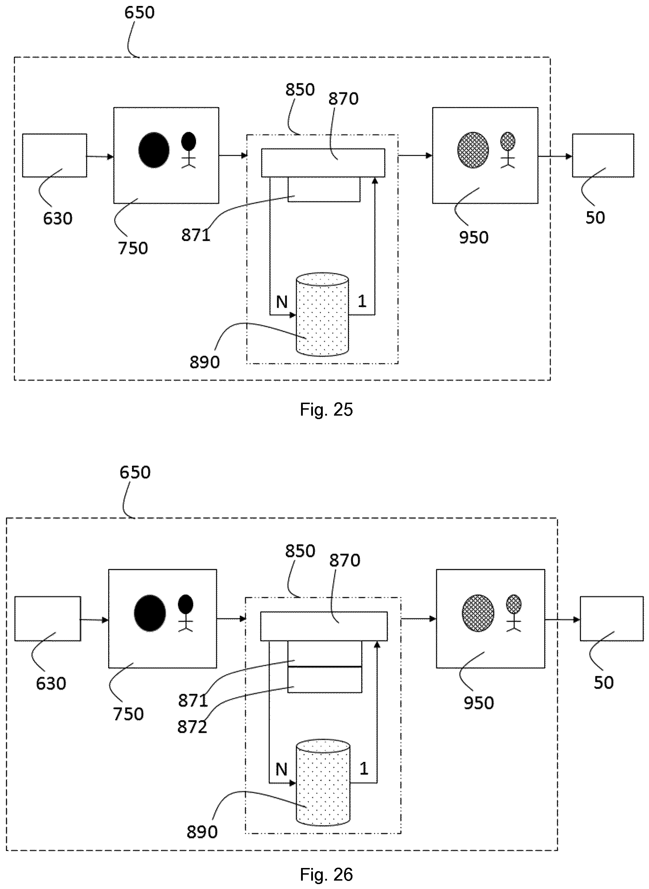

FIG. 25 and Fig. 26 show a raster image processor (650) of a preferred embodiment of the present invention wherein an electronic document (630) is converted to a continuous-tone image (750). Said raster image processor (650) comprises a screener (850) for halftoning said continuous-tone image (850) into a halftone raster image (950) by 1 threshold tile selected from N threshold tiles stored in a memory (890). Said single threshold tile is selected by a threshold selector (870). Said selection is based on supplied information in an input field (871) in which information regarding substrate is to be used. The halftone raster image (950) is ready for printing by a printing device (50). Fig. 26 is a raster image processor (650) wherein additionally the selection is based on supplied information in another input field (872) in which information regarding ink is to be used. The printing device (50) is than capable of using a plurality of ink.

Said threshold selector may comprise an ink-usage predictor wherein several threshold tiles of said memory (890) are used for halftoning said continuous-tone image (750) to halftone raster images whereof the ink usage is predicted. The one of the smallest ink-usage is than selected.

### Description of embodiments

### Ink-usage predictor

An ink-usage predictor is a tool to predict the amount of ink that shall be used for a halftone raster image (RT) on a selected printing device. Said tool is typically a data processing system adapted to predict said amount or a computer program comprising instructions to predict said amount. Said computer program is preferably stored on a computer-readable storage medium.

After halftoning a continuous-tone image (CT) into a halftone raster image (RT), pixels of said raster image are analysed and a certain amount of ink per pixel is determined by said ink-usage predictor. The sum of said determined amount of ink per pixel determines the amount of ink that is needed to print one copy of the continuous-tone image on a selected substrate by a printing device. Also an amount per ink is determined for non-image pixels by said ink-usage predictor. This is not automatically zero because ink can flow towards said non-image pixels during or after printing until the ink is fixed on the selected substrate. Therefor pixels also neighbour pixels from pixels of said raster image (RT) are analysed to predict the flow of ink during or after printing until the ink is fixed on the selected substrate. The behaviour of ink flow in non-image pixels and image pixels on a selected substrate is modelled for the present invention by using one or more printing targets comprising a plurality of patches having regular tiled clusters with image-pixels wherein said clusters are mixed with clusters having non-image-pixels. The size and/or shape of said clusters is different between said patches.

By measuring print densities (e.g. by XRITE 500 Series spectro-densitometer) or optical densities, mottle and/or ink layer thickness of printed patches on a selected substrate said model can be calculated for prediction of the amount of ink per pixel in a halftone raster image. For each substrate a model may be calculated because said ink flow (e.g. by absorbance) depends on the substrate parameters such as structure, composition and optical properties. For example, with optical microscopy (e.g. a scanning electron microscopy (SEM)) the ink flow in non-image pixels and image pixels may additional be determined and the presence of ink can be measured. Also the amount of pigments of the used ink for said printed patch may be determined (e.g. by extraction) to recalculate the amount of ink for said printed patch by knowing the percentage of pigment in the used ink. The model may use said amount of ink for the regular tiled image pixels in said patch for the prediction. The ink-usage predictor determines from a pixel if it has some similarity between the pixels of said patches and returns the amount of ink of a patch or a recalculation of if if the similarity matches. The amount of pigments of the used ink for a pixel may also be determined to recalculate the amount of ink for said pixel (printed or not printed) by knowing the percentage of pigment in the used ink.

The ink-usage predictor may use for its model an artificial neural network which is a computing system inspired by biological neural networks that constitute animal brains. More specifically, the predictor is capable of training itself by said artificial neural network to determine the amount of ink that is needed for printing a halftone raster image. By using previous measurements on the printed target, printed patches and/or printed pixels said artificial neural network is trained to accomplish its task on any other halftone raster image, regardless the used threshold tile and continuous tone image, instead of said print target, namely the task to predict the amount of ink that shall be used when printed on a selected substrate.

The use of artificial neural networks in the technical field of the present invention is known for example for color control and color management.

### Raster image processor

A raster image processor (RIP) is a tool for digital halftoning a continuous tone image (CT) or other file formats including PDF (portable document format), into a halftone raster image (RT) for a printing device. Said tool is typically a data processing system adapted to halftone said continuous tone image (CT) or a computer program comprising instructions to digital halftone said continuous tone image (CT). Said computer program is preferably stored on a computer-readable storage medium. An example of such raster image processor is Harlequin Host Renderer from Global Graphics.

A raster image processor (RIP) may convert the halftone raster image (RT) into a format that a printing device such as in inkjet printer can understand. In the present invention said printing device is capable of printing on a plurality of substrates (S₁, S₂,..., S_{M}); and preferably is capable is of printing with a plurality of inks (I₁, I₂,..., I_{Q}), such as an offset press.

The halftone raster image (RT) is mostly a well-known raster graphics file format such as TIFF^{™} (tagged image file format), RTL (raster transfer language) or BMP file format (bitmap).

### Halftone raster image

The halftone raster image (RT) comprises in the present invention regularly tiled halftone dots, generated by using a threshold tile preferably a single threshold tile. The generation is done by a screener, also called halftone raster generator, which is part of the raster image processor.

The halftone raster image produced by the present invention is suitable for rendering a continuous-tone image (CT), i.e. it creates the illusion of a continuous-tone image (CT) on a printed copy. This requirement implies that the screen frequency, i.e. the number of halftone cells arranged next to each other per length unit in the direction that yields the greatest value, is above 40 lines per inch (LPI; 15.7 lines/cm), more preferably above 60 LPI (23.6 lines/cm) and most preferably above 100 LPI (39.4 lines/cm). If the screen frequency is below 40 LPI, the halftone dots become visible at viewing distance, also called reading distance, which is about 20 cm. Such low screen frequencies are typically used in artistic screening, which is used for decorative purposes such as patterned illustrations, wherein it is intended that the individual dots are visible to the naked eye. Halftone raster images wherein the halftone dots are clearly visible at viewing distance are therefore not suitable and shall not be produced by the present invention.

The above mentioned screen frequency defines the spatial frequency of the halftone cells comprised in the halftone raster image. As explained above, a halftone cell on its turn consists of a grid of pixels and the spatial frequency thereof, called resolution, is expressed as dots per inch (DPI) or pixels per inch (PPI). In case the halftone raster image is written by means of a scanning laser on e.g. a film or a printing plate, the pixels are also called laser dots and the resolution then refers to the number of laser lines per inch. The halftone raster image produced in the method of the present invention has preferably a resolution larger than 600 DPI, more preferably larger than 1200 DPI. Higher resolutions up to 9600 DPI may also be used, e.g. for the printing of security features.

Since a printing plate can transfer only a single colour, it is evident that the halftone raster image used in the method of the present invention is a monochrome image, which may represent a colour selection of a multi-colour printing process, e.g. one of the 4 basic colours in CMYK printing.

The quality of the printed image is preferably checked with colour density measurement. The colour density values can then be used as input parameters of the raster image processor of the present invention. Said processor, which produces the halftone raster image, adjust said image so that the quality of the printed image is improved in a subsequent press run and/or so that more ink is saved in a subsequent press run.

### Halftone cells

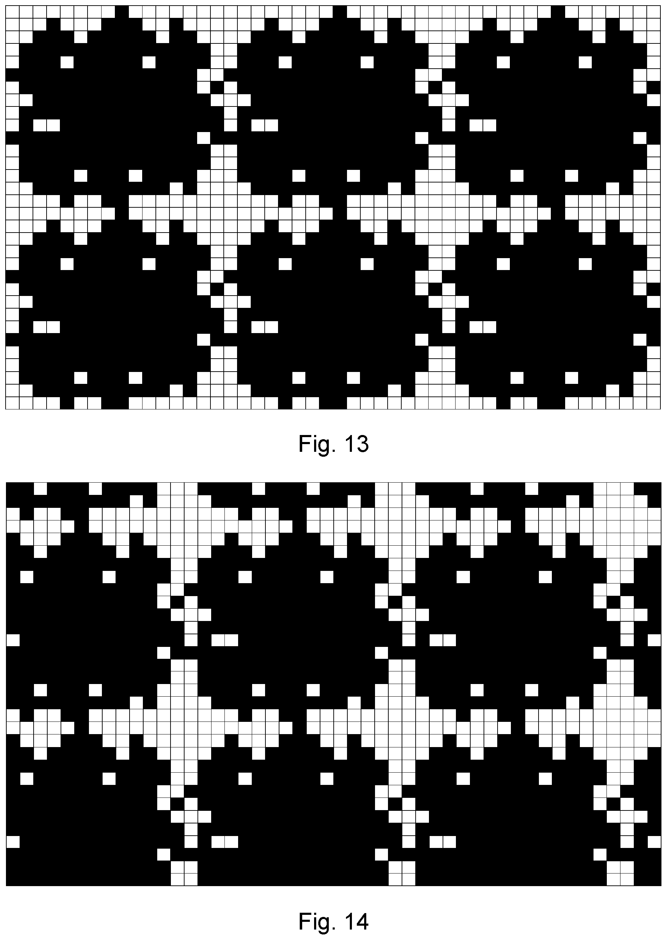

The halftone raster image produced by the present invention comprises regularly tiled halftone cells. The cells may be tiled along a triangular, rectangular or hexagonal grid and more preferably along a square grid. FIG.13 and FIG.14 each show examples of the preferred embodiment wherein 6 halftone cells are tiled as a square grid.

The halftone cells themselves also consist of a grid, more particularly a grid of pixels, which may be image pixels or non-image pixels. These pixels preferably have the shape of a regular polygon or convex polygon, e.g. a triangle, a square, a rectangle, a rhombus or a hexagon. The Figures show examples of preferred embodiments, wherein the halftone cells consist of a grid of square pixels.

The halftone raster image that may be produced with a RIP of the present invention by one of its stored threshold tiles preferably comprises halftone cells which have 2 or more image clusters, i.e. mutually separated groups of more than 4 adjacent image pixels (= TYPE B). In a more preferred embodiment, the halftone raster image comprises halftone cells having more than 2 image clusters, e.g. at least 3 or 4 image clusters, more preferably at least 5 and most preferably at least 6 image clusters.

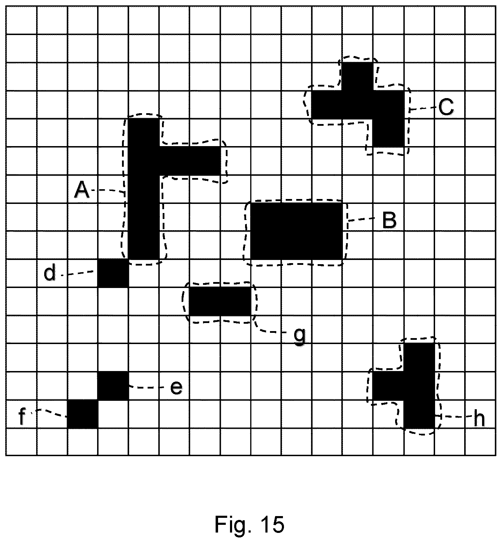

In the above definition of 'image cluster', the image pixels are considered to be adjacent if they share at least one edge of the polygon. FIG. 15 shows three such image clusters: cluster A consists of 7 adjacent image pixels; cluster B consists of 6 adjacent image pixels; and cluster C consists of 5 adjacent image pixels. The image pixels d, e and f are in contact with another image pixel but only by a corner of the square; as these pixels are not sharing an edge, they are not considered to be adjacent, as defined above. Groups of 4 or less image pixels like group h neither constitute an image cluster in accordance with the above definition.

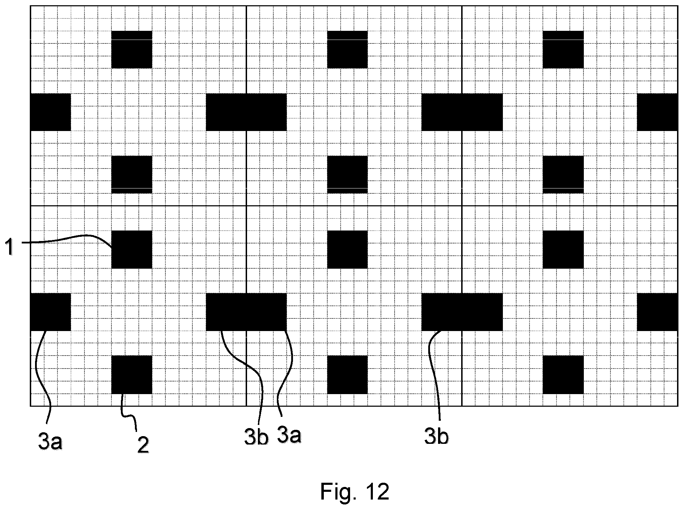

FIG. 12 illustrates a further refinement of the definition of an image cluster used herein. When halftone cells are tiled, groups of image pixels in one halftone cell may connect with one or more adjacent edges to another group of image pixels in another halftone cell. FIG. 12 shows an example wherein the group of image pixels designated 3a connects to the group designated 3b. In accordance with the present invention, such groups shall not be regarded as separate clusters but together represent a single cluster. As a result, the halftone cells represented in FIG. 12 each contain only 3 image clusters.

Contrary to conventional AM dots which represent the same dot percentage, the image clusters used in the present invention allow to obtain a printed image of the same image density with less ink. The large number variances of said halftone dots makes it possible to optimize print quality and/or to minimize ink usage. The reasons for this advantage are not completely understood but engineers have systematically measured that press runs according to the method of the present invention consume significantly less ink compared to press runs with plates exposed with a conventional AM screen of the same original image. When compared with FM screens, it is observed that a higher run length can be obtained, because the clusters are larger than the FM microdots and therefore less susceptible to wear on the press. FM screens consist either of a plurality of single image pixels or a group of four (2x2) image pixels, which degrade more easily than the image clusters used in the present invention.

Without being limited by the underlying mechanism, it is at present assumed that the halftone cells having clustered image pixels as described above, when compared to a conventional AM halftone dot representing the same relative image density, either absorb a thinner ink film on the ink accepting areas of the plate and/or provide a better spreading of the ink film into the empty (non-image) areas between the image clusters. The ink saving effect has been observed with various images and various plates. Ink savings of about 10% were frequently obtained. Ink and paper are the major cost factors of a printer, so even a reduction of the ink consumption by a few percent represents a high cost saving. Optimization of the halftone raster image in relation to the substrate that is to be printed, e.g. by adjusting the number, size, shape and/or distribution of image clusters in the halftone cells, can lead to even more ink saving, in the range from 10% to 20% compared to conventional AM screening.

Less consumption of ink provides additional advantages resulting therefrom, e.g. faster drying and/or less energy consumption by drying equipment such as curing units and ovens. Faster drying is particularly beneficial for printing on uncoated plastic foils and in newspaper printing. The better spreading of the ink also reduces ink setoff, i.e. the transfer of ink from one printed copy to the back side of another copy lying on top of it, for example in the press delivery tray. Shine-through, also called print-through, whereby images become visible at the backside of the substrate, e.g. a thin, ink absorbing substrate as used for the printing of newspapers, is reduced as well. For all these reasons, the method of the present invention is especially advantageous when performed on a perfecting press, i.e. a press that allows the simultaneous printing on both sides of the substrate in one pass through the press.

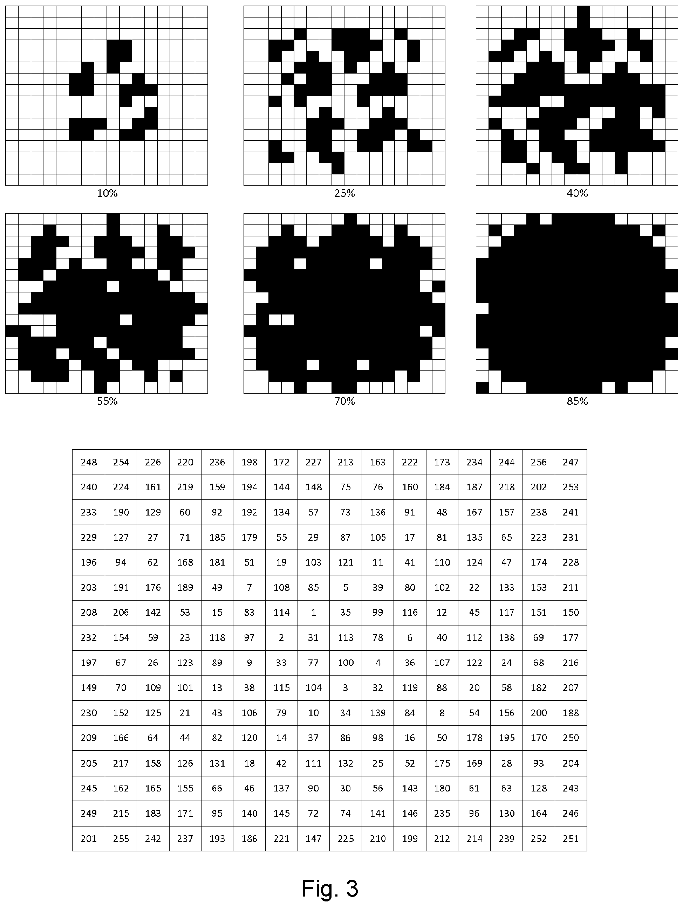

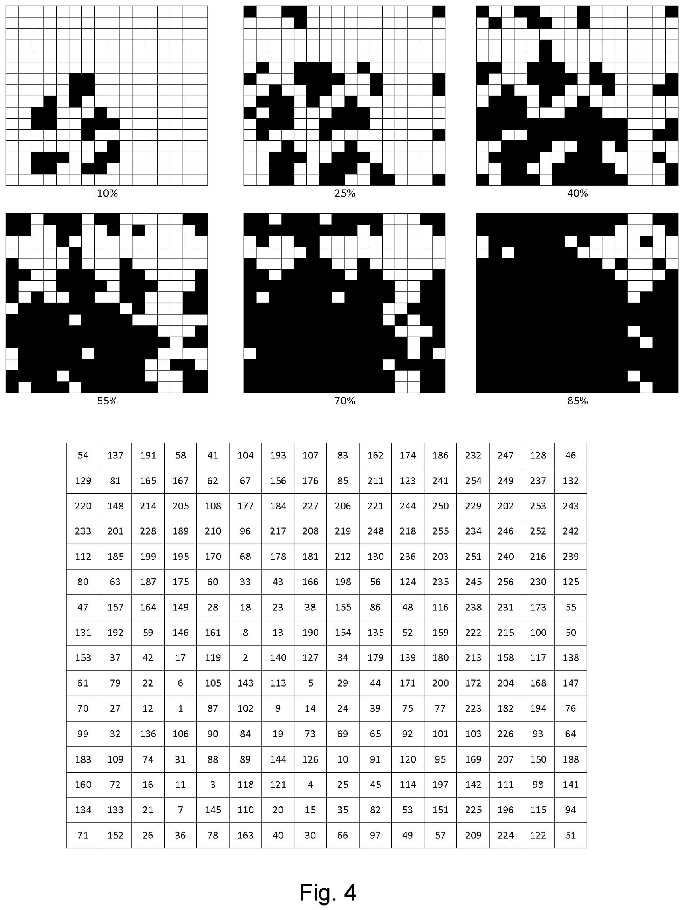

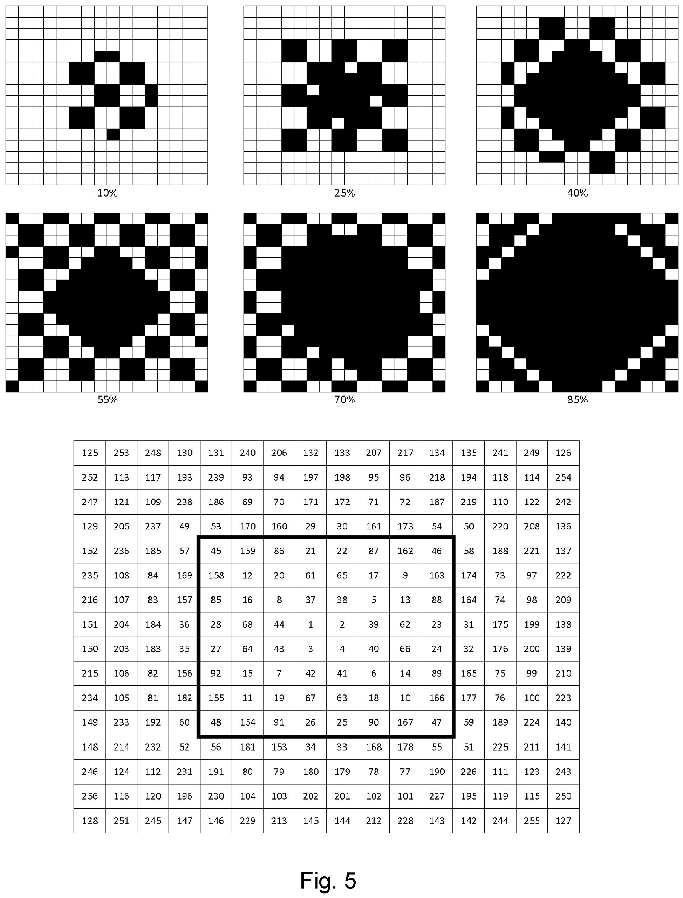

In a preferred embodiment, the image clusters are not distributed randomly over the halftone cell, but are concentrated locally, so that the image clusters together mimick a conventional AM dot and the method maintains the advantages of AM screens as much as possible. The image clusters may be concentrated in e.g. a quarter section of the halftone cell. As a result, that quarter section represents a higher relative image density than the other sections of the halftone cell. More preferably, one quarter section of the halftone cell has a relative image density which is at least twice the relative image density represented by the halftone cell as a whole. FIG.5 shows an example of such an arrangement: the 8x8 pixels around the centre of the cell define a quarter section, indicated by thick lines, which has a much higher density of image pixels than the cell as a whole. The higher concentration of image pixels should not necessarily be positioned near the centre of the cell : FIG.3 and FIG.4 show different local concentrations of image pixels, which however represent the same halftone image when these cells are tiled next to each other, as shown in FIG. 13 and 14 respectively.

The halftone raster image generated by the raster image processor from the present invention with a selected threshold tile may contain a combination of different types of halftone cells, e.g. halftone cells with multiple image clusters, as defined above, combined with conventional halftone cells, e.g. AM halftone cells wherein all image pixels are grouped in a single cluster. One or more parts of the image may also be represented by FM screens. In a highly preferred embodiment of the present invention, the highlights and midtones of the image, i.e. the subset of all the halftone cells in the image which represent a relative image density of less than 50%, consist entirely of halftone cells having 2 or more image clusters as defined above. In another embodiment, only a portion of the halftone cells which represent highlights and midtones of the image contain 2 or more image clusters. Said portion may be as low as 5%. Preferably, said portion is at least 10%, more preferably at least 25% and even more preferably at least 50%.

### Substrate

The substrate on which the halftone raster image may be printed can be of any kind, e.g. plastic films or foils, release liner, textiles, metal, glass, leather, hide, cotton and of course a variety of paper substrates (lightweight, heavyweight, coated, uncoated, paperboard, cardboard, etc.). The substrate may be a rigid work piece or a flexible sheet, roll or sleeve. Preferred flexible materials include e.g. paper, transparency foils, adhesive PVC sheets, etc., which may have a thickness less than 100 micrometres and preferably less than 50 micrometres. Preferred rigid substrates include e.g. hard board, PVC, carton, wood or ink-receivers, which may have a thickness up to 2 centimetres and more preferably up to 5 centimetres. The substrate may also be a flexible web material (e.g. paper, adhesive vinyl, fabrics, PVC, textile). A receiving layer, for example an ink-receiving layer, may be applied on the substrate for a good adhesion of the reproduced image on the substrate.

Print quality on a substrate depends on several factors. The print quality becomes better by the selected threshold tile from the present invention. Said several factors are for example:
- amount of paper sizing additives in a substrate;
- smoothness, mass density and calliper variations of a substrate;
- strength and dimensional stability of a substrate;
- porosity of a substrate
- moisture and curl of a substrate

But also some optical and appearance of paper are factors that influence the print quality such as brightness, whiteness, opacity, specular gloss.

### Threshold tile

According to the present invention, the halftone raster image is generated by a threshold tile, preferably a single threshold tile. Digital halftoning by means of a threshold tile, sometimes also called threshold matrix or threshold array, is known in the art. When used for multi-colour printing, the number of threshold tiles is preferably the same as the number of colour channels in the original continuous-tone image.

Digital halftoning with a threshold tile typically implies that the original image is sampled into cells which are mapped on the threshold tile. The local density value of the original image is then compared with each of the values in the array (if necessary, the density range of the original image is adjusted so that it is equal to the range in the array). The output pixel is set to 0 (= OFF) if the original density value is lower than the threshold value of said pixel. Otherwise, if the density value is equal to or exceeds the threshold value, the output pixel is set to 1 (= ON). These steps are repeated for all cells in the image.

The dimension of the array, i.e. the number of pixels per halftone cell, may depend on various factors such as the resolution of the image setter and the desired quality of the printed image. The array is preferably arranged as a square (n x n dimension) or a rectangle (m x n, with m>n). FIGs.1-16 show examples of square threshold tiles having a dimension of 16x16 locations, wherein each location contains a threshold value in a certain range. In these particular examples, the threshold value range (1-256) is equal to the number of locations (16x16) in the array; in other embodiments, such as the example shown in FIG. CL16, the value range may be lower than the number of locations and then each individual value may occur at multiple locations of the array.

In order to produce higher relative image densities, the threshold tile is designed in such a way that the number and/or the size of the image clusters increases in line with the corresponding density of the original image. For example, FIG.1 shows a cell which represents a relative image density of 25% with 7 image clusters, of which the size grows at increasing image densities. FIG.3 shows a 10% cell with 5 image clusters, wherein both the size and the number of clusters grow at higher image densities. While the image density of the halftone cell grows by adding image pixels, it is preferred to keep the non-image pixels together in non-image clusters, which are defined as mutually separated groups of adjacent non-image pixels. By keeping the number of non-image clusters as low as possible in the shadows of the image, the ink can spread to a higher extent than when the non-image pixels are isolated or distributed over multiple clusters. In that way, ink can also be saved in the shadow areas of the image.

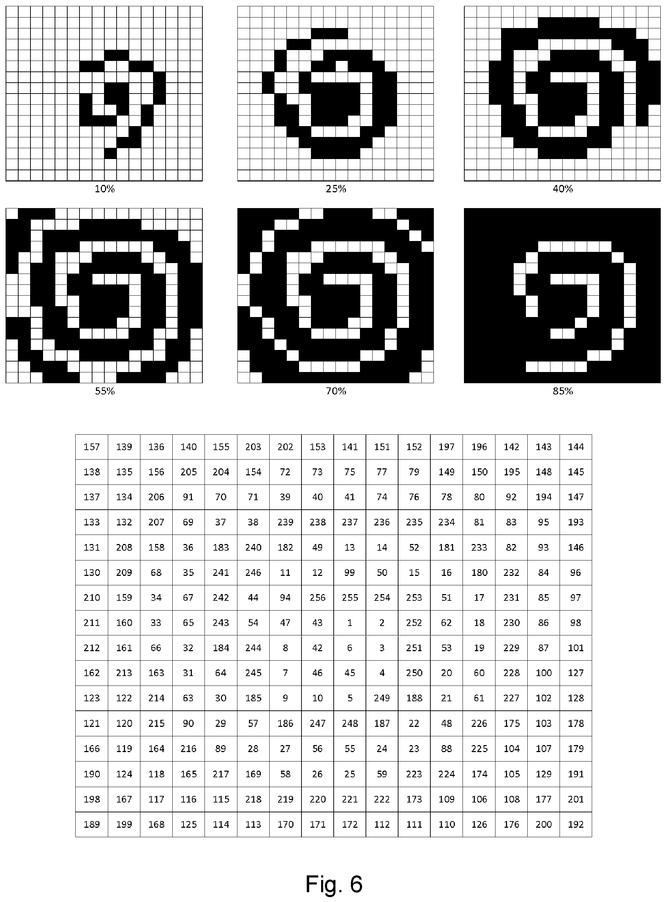

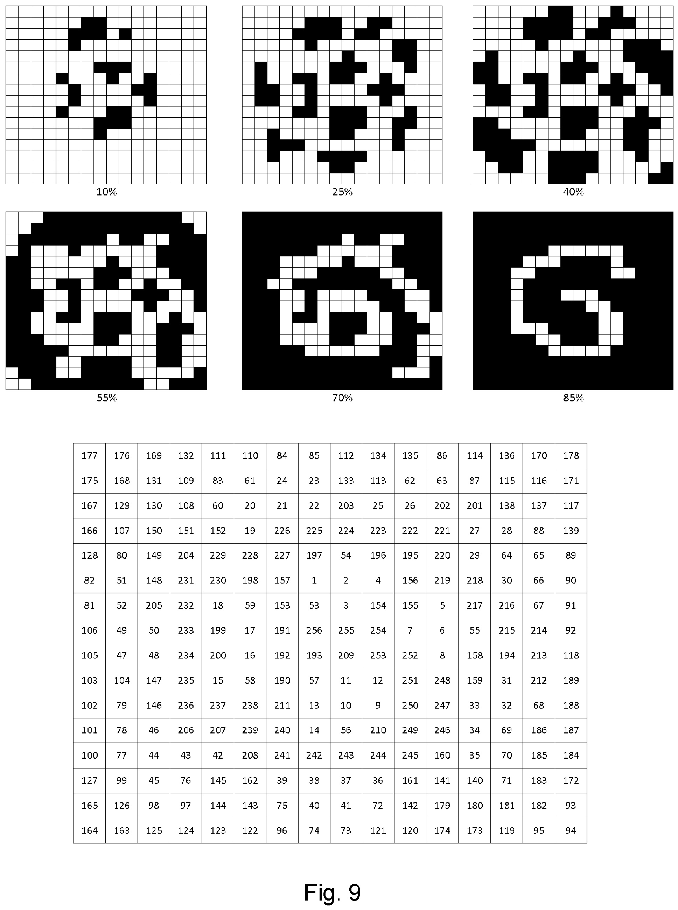

In the preferred embodiment using spiral halftone dots, the relative image density can be increased by growing the length and/or the thickness of the first spiral (which comprises the image pixels), as shown in FIG.6, or by inserting image pixels inside the second spiral; or by a combination of any of these methods. In the shadows of the image, more image pixels are added to the halftone cell in such a way that the ink channel formed by the second spiral (which comprises the non-image pixels) shrinks and/or becomes thinner, as shown in FIGs. 6 and 9.

In a preferred embodiment the plurality of threshold tiles (TT₁, TT₂,..., TT_{N}) are
a) threshold tiles for generating halftone images wherein at least a portion of all the halftone cells is a halftone dot comprises:
   (i) image pixels arranged as a first cluster or as a plurality of clusters which together represent a first path; and wherein said image pixels having a feed point (1003, 2003); and
   (ii) non-image pixels arranged as a second cluster or as a plurality of clusters which together represent a second path (= TYPE A, FIGs
      17-24); and/or
b) threshold tiles for generating halftone images wherein at least a portion of all the halftone cells comprises at least 2 image clusters, image clusters being defined as mutually separated groups of more than 4 adjacent image pixels (=TYPE B, FIGs 1-16). Preferred embodiments of TYPE B and advantages are described in heading "halftone cells".

For both types (TYPE A and TYPE B) a number of variants can be generated but it is found they have to be fine-tuned depending on the selected substrate and/or selected ink. Both types have similar advantages such as resulting in thinner ink layers on the selected substrate.

A substrate is in the present invention also a substrate-type. An ink is in the present invention also an ink-type.

For TYPE A with a plurality of clusters which together represent a first path, the first path may be part of a space filling curve in said halftone cell, such as a Hilbert curve or a Peano curve.

All the clusters which together constitute the first path are preferably mutually connected so that the first path represents a continuous line following said path. The first path may also contain isolated non-image pixels or may comprise disconnected clusters, so that the first path is interrupted by empty space at one or more locations. In that embodiment, the empty space which separates adjacent clusters of the first path may be regarded as protrusions of the second path into the first path. Such protrusions of the second path may cut the first path completely into disconnected clusters, or incompletely whereby the first path is not interrupted but reduced locally to a lower thickness.

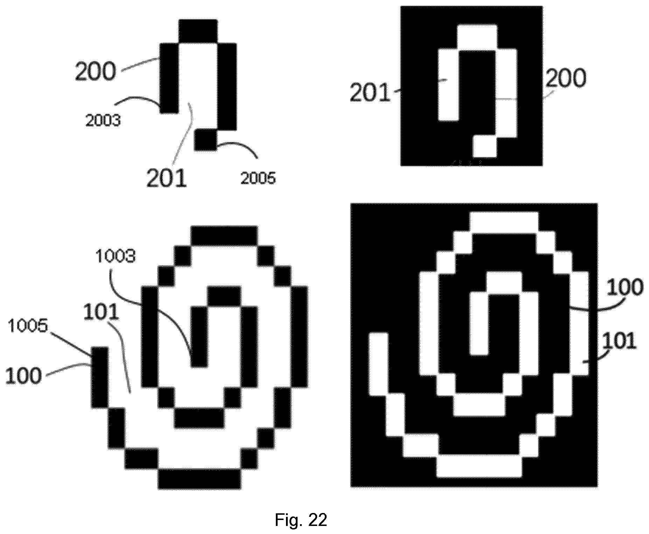

In a preferred embodiment is the first cluster an arc (200) and/or the first plurality of clusters a plurality of arcs which together represent a first spiral (100) as first path. Hereby is the second cluster another arc (201) and/or the second plurality of arcs a plurality of arcs, which together represents a second spiral (101) as second path preferably along said first path. Such dots will be referred to herein as "spiral halftone dots". The image pixels are represented by the black areas in the figures. The non-image pixels define non-printing areas and correspond to the empty space that is left in the dot as represented by the white areas in the figures. The two dots at the left hand side of FIG. 22 have a low dot coverage (low percentage of image pixels) and represent highlights of an image, while the two dots at the right hand side of FIG. 22 have a high dot coverage and represent shadows of said image. The first spiral as first path is a preferred embodiment but also intersecting paths as first or second path are part of the invention. The first and second path may also not a spiral.

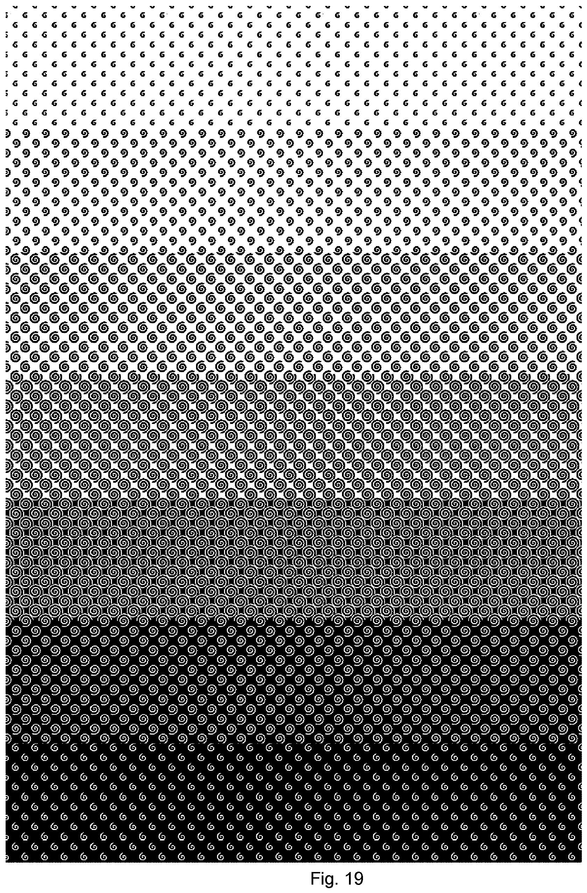

The first path, preferably a spiral, grows in length from said feed point (2003, 1003), also called inner end, along said path, preferably spiral-wise, to an outer end (2005, 1005). The path, preferably a spiral, may overlap with neighbouring halftone dots usually from midtones to shadows (FIG. 19). If said first path is a spiral, the growing is also defined by a start angle for its bending or windings. This is different that AM halftone dots which extends a single cluster to a larger single cluster.

In the highlights of the image, the number of image pixels per dot is low so that they cannot form a complete winding of the first spiral but just a section thereof, which is referred to as the "first arc". The empty space which is partially enclosed by the first arc also may be considered as another arc, which is referred to herein as the "second arc". In the midtones and shadows of the image, the number of image pixels per dot is higher so that they can form one or more windings of the "first spiral", thereby also defining a "second spiral" of non-image pixels defined by the empty space between the windings of the first spiral (see e.g. FIG.19).

Without being bound by theory, it can be observed upon magnification of the printed image that the shape and size of the printed ink blob is less affected by uncontrolled spreading of the ink because, when the ink blob is pressed onto the substrate, e.g. by a printing press, the excess ink that is printed by the first cluster or first path can flow into the empty space that corresponds to the second cluster or second path. But said spreading depends on substrate and/or ink. The empty space defines an ink channel that can accept ink, which is printed from the first cluster/path, thereby providing means for controlling the spreading of the ink.

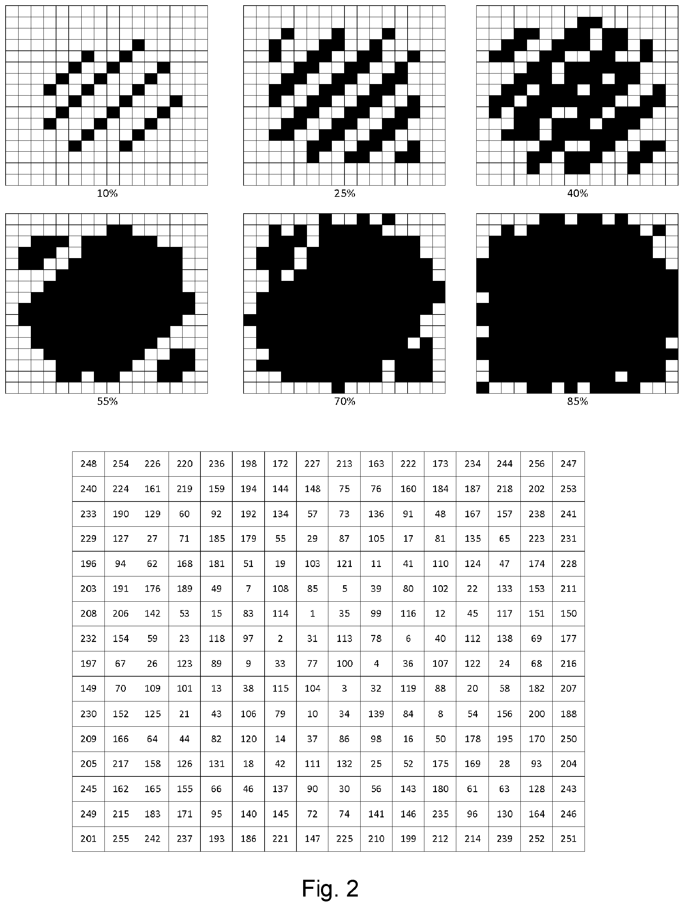

For TYPE B the plurality of image clusters within a halftone cell are preferably mutually grouped together within a virtual circle or virtual ellipse or virtual ellipse. Examples are illustrated in Fig. 2 and Fig. 3 wherein the image clusters are positioned within a virtual circle that preferably grows depending on the local density values of a continuous image such as in AM halftone dots.

### Threshold selector

A threshold selector is a tool for selecting a threshold tile based on one or more conditions. Said tool is typically a data processing system adapted to select a threshold from a plurality of thresholds or a computer program comprising instructions to select said threshold. Said computer program is preferably stored on a computer-readable storage medium.

In the present invention said of plurality of threshold tiles (TT₁, TT₂,..., TT_{N}) are stored in a memory and one or more conditions are based on information supplied to the input field in which information regarding substrate is to be used. The number of threshold tiles is preferably more than 5, more preferably more than 10.

The input field from the present invention is preferably part of a graphical user interface (GUI) shown on a computer display such as disclosed in US9058105B2 (International Business Machines Corp). An input field is preferably a GUI feature such as a list-box, combo-box and/or an editable text field which gives a RIP-user multiple ways to input or select the desired information. The input field may be part of a dialog box from the RIP.

### Prepress workflow system

A prepress workflow system is a tool for managing digital documents, preferably defined in a page description languages (PDL) such as Postscript^{™}, wherein said documents are prepared for printing on a printing device, such as an offset press. Said tool is typically a data processing system adapted to manage and preparing said documents for printing or a computer program comprising instructions to manage and to prepare said documents for printing. Said computer program is preferably stored on a computer-readable storage medium. An example of such prepress workflow system is Apogee^{™} from AGFA NV.

In a preferred embodiment a prepress workflow system comprises a raster image processor from the present invention and further comprises means for transmitting the halftone raster image (RT) to a digital printing press or a plate setter for obtaining a printing plate. Said printing plate is preferably a lithographic plate or flexographic plate.

### Printing plate

The printing plates of the present invention are obtained by the exposure of the halftone raster image on a light- or heat-sensitive material called printing plate precursor. The plate precursor can be positive or negative working. A positive plate precursor has a coating which after exposure and development accepts ink at non-exposed areas and no ink at exposed areas. A negative plate accepts ink at exposed areas and no ink at non-exposed areas. The image pixels shown in the Figures define ink-accepting areas of the plate and thus correspond to exposed or non-exposed areas of a negative or positive plate precursor respectively.

The plates of the present invention are preferably lithographic or flexographic printing plates. Lithographic plates are typically obtained by exposing the halftone raster image on the light- or heat-sensitive coating of a printing plate precursor by means of a scanning laser, preferably a violet or a near infrared laser, or another digitally modulated light source, such as a digital mirror device, LCD or LED display. After processing the exposed precursor with a suitable development liquid, a lithographic printing plate carrying the halftone raster image of the present invention is obtained. That plate can then be mounted on a lithographic printing press, preferably an offset press, wherein ink is supplied to the plate which is then transferred onto the substrate to be printed. Alternatively, the exposed precursor can be mounted directly on the press, i.e. without any preceding liquid treatment or other development, and the development of the image may then occur by means of the ink and/or fountain which is supplied to the plate at the start of the press.

Flexographic plates are generally obtained by UV exposure of a photopolymer coating, typically with a UV lamp through a mask which can be a graphic film in contact with the photopolymer coating or an in-situ mask that is present on top of the photopolymer coating. The mask is preferably obtained by exposing the halftone raster image on the film or on the in-situ mask layer by means of a scanning laser, preferably a near infrared layer.

### Data processing system

A data processing system operates one or more computer programs for example a raster image processor. The present invention includes such a data processing system that is capable of performing the method of halftoning of the present invention and its preferred embodiments.

Part or whole of the data processing system and/or the functional units or blocks thereof may be implemented in one or more circuits or circuitry, such as an integrated circuit(s) or as an LSI (large scale integration). Each functional unit or block of the data processing system may be individually made into an integrated circuit chip. Alternatively, part or whole of the functional units or blocks may be integrated and made into an integrated circuit chip.

A software program, also called a computer program, which is operated in the data processing system is a program controlling a processor in order to realize functions of the various preferred embodiments according to the present invention. Therefore, information which is handled by the data processing system is temporarily accumulated in a RAM at the time of the processing. Thereafter, the information may be stored in various types of circuitry in the form of ROMs and HDDs, and read out by circuitry within, or included in combination with, the data processing system as necessary, and modification or write-in is performed thereto. As a recording medium storing the program, any one of a semiconductor medium (for example, the ROM, a non-volatile memory card or the like), an optical recording medium (for example, a DVD, an MO, an MD, a CD, a BD or the like), and a magnetic recording medium (for example, a magnetic tape, a flexible disc or the like) may be used. Moreover, by executing the loaded software program, the functions of the various preferred embodiments of the present invention are not only realized, but the functions of preferred embodiments of the present invention may be realized by processing the loaded software program in combination with an operating system or other application programs, based on an instruction of the program.

Moreover, in a case of being distributed prepress workflow system or even a distributed raster image processor, the program can be distributed by being stored in the portable recording medium, or the program can be transmitted to a server computer which is connected through a network such as the Internet. In addition, a portion of a terminal device, a wireless base station, a host system, or other devices, or the whole thereof may be realized as an LSI which is typically an integrated circuit. Each functional unit or block of the data processing system may be individually chipped, or a portion thereof, or the whole thereof may be chipped by being integrated. In a case of making each functional block or unit as an integrated circuit, an integrated circuit controller that controls the integrated circuits, is added.

Finally, it should be noted that the description referring to "circuit" or " circuitry" is in no way limited to an implementation that is hardware only, and as persons of ordinary skill in the relevant art would know and understand, such descriptions and recitations of "circuit" or "circuitry" include combined hardware and software implementations in which the circuit or circuitry is operative to perform functions and operations based on machine readable programs, software or other instructions in any form that are usable to operate the circuit or circuitry.

There is no limitation on the location of the data processing system (18), it may be located at a prepress bureau, at the printing device or even at a third party location.

Digital connections with the data processing system may be made in any form. It can be a connection using an optical fiber or a wireless connection, such as a wifi connection according to the IEEE 802.11 standard.

## Claims

1. A raster image processor (RIP) for digital binary halftoning a continuous tone image (CT) by a single threshold tile (TT) into a halftone raster image (RT) for a printing device capable of printing on a plurality of substrates(S₁, S₂,..., S_{M});
wherein said processor comprises:
- an input field in which information regarding a substrate is to be used;
- a memory having stored thereon a plurality of threshold tiles (TT₁, TT₂,..., TT_{N}) for generating regularly tiled halftone dots, wherein the plurality of threshold tiles are used for halftoning said continuous tone image (CT) image to a plurality of halftone raster images;
- an ink-usage predictor configured to predict amounts of ink that shall be used for the plurality of halftone raster images to be printed on said substrate to be used, wherein said predicted amounts of ink are calculated from halftone raster images of the continuous tone image (CT) by threshold tiles of the plurality of threshold tiles (TT₁, TT₂,..., TT_{N}); and,
- a threshold selector which is capable to select said single threshold tile (TT) of said plurality of threshold tiles (TT₁, TT₂,... , TT_{N}) based on information regarding a substrate which is supplied to the input field, and additionally on the predicted amounts of ink from said ink-usage predictor.

2. The processor (RIP) according to claim 1
wherein the printing device is capable of printing with a plurality of inks (I₁, I₂,..., I_{Q}) and
wherein said processor further comprises an other input field in which information regarding an ink is to be used; and
wherein the threshold selector is capable of determining the single threshold tile (TT) based additionally on information regarding an ink which is supplied to the other input field.

3. The processor (RIP) according to claim 2 wherein the regularly tiled halftone dots are arranged according to a screen frequency larger than 100 lines per inch.

4. The processor (RIP) according to claim 3 wherein the regularly tiled halftone dots are arranged according to a screen angle selected from a group consisting of 0°, 7.5°, 15°, 22.5°, 75°, 45°, 67.5° and 82.5°.

5. The processor (RIP) according to claim 3 or claim 4 wherein the plurality of threshold tiles (TT₁, TT₂,... , TT_{N}) comprises a set of threshold tiles for generating halftone images wherein at least a portion of all the halftone cells is a halftone dot comprises:
(i) image pixels arranged as a first cluster or as a plurality of clusters which together represent a first path; and wherein said image pixels having a feed point (1003, 2003); and
(ii) non-image pixels arranged as a second cluster or as a plurality of clusters which together represent a second path.

6. The processor (RIP) according to claim 5 wherein said first path is a space filling curve inside said halftone cell.

7. The processor (RIP) according to claim 5 wherein said first path is a spiral.

8. The processor (RIP) according to claim 3 or claim 4 wherein the plurality of threshold tiles (TT₁, TT₂,... , TT_{N}) comprises a set of threshold tiles for generating halftone images wherein at least a portion of all the halftone cells comprises at least 2 image clusters, image clusters being defined as mutually separated groups of more than 4 adjacent image pixels.

9. The processor (RIP) according to claim 8 wherein the halftone cells of said portion have a quarter section which represents a relative image density which is at least twice the relative image density represented by the halftone cell as a whole.

10. The processor (RIP) according to claim 8 or claim 9 wherein the portion comprises at least 10% of all the halftone cells having a relative image density of less than 50%.

11. The processor (RIP) according to claim 8 or claim 9 wherein the portion comprises at least 4 image clusters.

12. A prepress workflow system comprising a raster image processor according to any of the precedent claims wherein said prepress workflow system further comprises:
- means for transmitting the halftone raster image (RT) to a digital printing press or a plate setter for obtaining a printing plate.

13. A prepress workflow system according to claim 12 wherein the printing plate is a lithographic or a flexographic printing plate.

## Patentansprüche

1. Ein Rasterbildprozessor (RIP) für digitale binäre Rasterung eines Halbtonbildes (CT) mittels einer einzelnen Schwellwertkachel (TT) zu einem Rasterbild (RT) für eine Druckvorrichtung, mit der eine Vielzahl von Substraten (S₁, S₂,..., S_{M}) bedruckt werden kann, wobei der Prozessor Folgendes umfasst:
- ein Eingabefeld, in dem Information bezüglich eines Substrats zu verwenden ist,
- einen Speicher, in dem eine Vielzahl von Schwellwertkacheln (TT₁, TT₂,..., TT_{N}) zur Erzeugung regelmäßig gekachelter Rasterpunkte gespeichert ist, wobei die Vielzahl von Schwellwertkacheln zur Rasterung des Halbtonbildes (CT) zu einer Vielzahl von Rasterbildern verwendet wird,
- eine Tintenverwendungsvorhersageeinheit, die so konfiguriert ist, dass damit Tintenmengen vorhergesagt werden, die für die Vielzahl von auf dem Substrat zu druckenden Rasterbildern verwendet werden, wobei die vorhergesagten Tintenmengen mittels Schwellwertkacheln der Vielzahl von Schwellwertkacheln (TT₁, TT₂,..., TT_{N}) aus Rasterbildern des Halbtonbildes (CT) berechnet werden,
- einen Schwellwertselektor, mit dem auf Basis von in das Eingabefeld eingeführter Information bezüglich eine Substrats und zusätzlich auf Basis der durch die Tintenverwendungsvorhersageeinheit vorhergesagten Tintenmengen die einzelne Schwellwertkachel (TT) der Vielzahl von Schwellwertkacheln (TT₁, TT₂,..., TT_{N}) ausgewählt werden kann.

2. Der Prozessor (RIP) nach Anspruch 1, wobei mit der Druckvorrichtung eine Vielzahl von Tinten (I₁, I₂,..., I_{Q}) gedruckt werden kann und wobei der Prozessor ferner ein weiteres Eingabefeld, in dem Information bezüglich einer Tinte zu verwenden ist, umfasst, und wobei mit dem Schwellwertselektor zusätzlich auf Basis von in das weitere Eingabefeld eingefügter Information bezüglich einer Tinte die einzelne Schwellwertkachel (TT) bestimmt werden kann.

3. Der Prozessor (RIP) nach Anspruch 2, wobei die regelmäßig gekachelten Rasterpunkte gemäß einer Rasterweite von über 100 Linien pro Zoll angeordnet sind.

4. Der Prozessor (RIP) nach Anspruch 3, wobei die regelmäßig gekachelten Rasterpunkte gemäß einer Rasterwinkelung, gewählt aus einer Gruppe bestehend aus 0°, 7,5°, 15°, 22,5°, 75°, 45°, 67,5° und 82,5°, angeordnet sind.

5. Der Prozessor (RIP) nach Anspruch 3 oder Anspruch 4, wobei die Vielzahl von Schwellwertkacheln (TT₁, TT₂,... , TT_{N}) einen Satz von Schwellwertkacheln zur Erzeugung von Rasterbildern umfasst, wobei mindestens ein Teil aller Rasterzellen ein Rasterpunkt ist, umfassend:
(i) Bildpixel, die als erster Cluster oder als Vielzahl von Clustern, die gemeinsam eine erste Strecke darstellen, angeordnet sind, und wobei die Bildpixel einen Beginnpunkt (1003, 2003) aufweisen, und
(ii) Nicht-Bildpixel, die als zweiter Cluster oder als Vielzahl von Clustern, die gemeinsam eine zweite Strecke darstellen, angeordnet sind.

6. Der Prozessor (RIP) nach Anspruch 5, wobei die erste Strecke eine raumfüllende Kurve innerhalb der Rasterzelle ist.

7. Der Prozessor (RIP) nach Anspruch 5, wobei die erste Strecke eine Spirale ist.

8. Der Prozessor (RIP) nach Anspruch 3 oder Anspruch 4, wobei die Vielzahl von Schwellwertkacheln (TT₁, TT₂,... , TT_{N}) einen Satz von Schwellwertkacheln zur Erzeugung von Rasterbildern umfasst, wobei mindestens ein Teil aller Rasterzellen mindestens 2 Bildcluster umfasst, wobei Bildcluster als voneinander getrennte Gruppen von mehr als 4 angrenzenden Bildpixeln definiert werden.

9. Der Prozessor (RIP) nach Anspruch 8, wobei die Rasterzellen des Teils einen Viertelbereich aufweisen, deren relative Bilddichte bei mindestens zweimal der durch die Rasterzelle als Ganzes dargestellten relativen Bilddichte liegt.

10. Der Prozessor (RIP) nach Anspruch 8 oder Anspruch 9, wobei der Teil mindestens 10% aller Rasterzellen mit einer relativen Bilddichte von weniger als 50% umfasst.

11. Der Prozessor (RIP) nach Anspruch 8 oder Anspruch 9, wobei der Teil mindestens 4 Bildcluster umfasst.

12. Ein Arbeitsablaufsystem für die Druckvorstufe, umfassend einen Rasterbildprozessor nach einem der vorstehenden Ansprüche, wobei das Arbeitsablaufsystem für die Druckvorstufe ferner:
- Mittel zur Übertragung des Rasterbildes (RT) zu einer digitalen Druckmaschine oder einem Plattenbelichter zum Erhalten einer Druckplatte umfasst.

13. Ein Arbeitsablaufsystem für die Druckvorstufe nach Anspruch 12, wobei die Druckplatte eine lithografische Druckplatte oder eine flexografische Druckplatte ist.

## Revendications

1. Processeur d'image tramée (RIP) pour le tramage binaire numérique d'une image à tons continus (CT) au moyen d'un seul carreau seuil (TT) en une image tramée (RT) pour un dispositif d'impression qui permet d'imprimer sur une multitude de substrats (S₁, S₂,..., S_{M}), **caractérisé en ce que** ledit processeur comprend:
- un champ de saisie dans lequel sera utilisée de l'information relative à un substrat,
- une mémoire dans laquelle est mémorisée une multitude de carreaux seuil (TT₁, TT₂,..., TT_{N}) destinée à générer des points de trame disposés en un carrelage régulier, **caractérisé en ce que** la multitude de carreaux seuil est utilisée pour le tramage de ladite image à tons continus (CT) en une multitude d'images tramées,
- un prédicteur d'utilisation d'encre qui est configurée de façon à prédire des quantités d'encre à utiliser pour la multitude d'images tramées à imprimer sur ledit substrat, **caractérisé en ce que** lesdites quantités d'encre prédites sont calculées à partir d'images tramées de l'image à tons continus (CT) au moyen de carreaux seuil de la multitude de carreaux seuil (TT₁, TT₂,..., TT_{N}),
- un sélecteur de seuil permettant de sélectionner ledit seul carreau seuil (TT) de ladite multitude de carreaux seuil (TT₁, TT₂,..., TT_{N}) sur la base d'information relative à un substrat saisie dans le champ de saisie et également sur la base des quantités d'encre prédites par ledit prédicteur d'utilisation d'encre.

2. Processeur (RIP) selon la revendication 1, **caractérisé en ce que** le dispositif d'impression permet d'imprimer une multitude d'encres (I₁, I₂,..., I_{Q}) et **caractérisé en ce que** ledit processeur comprend en outre un champ de saisie supplémentaire dans lequel est utilisé de l'information relative à une encre et **caractérisé en ce que** le sélecteur de seuil permet de déterminer également ledit seul carreau seuil (TT) sur la base d'information relative à une encre telle que saisie dans le champ de saisie supplémentaire.

3. Processeur (RIP) selon la revendication 2, **caractérisé en ce que** les points de trame disposés en un carrelage régulier sont disposés selon une linéature de trame supérieure à 100 lignes par pouce.

4. Processeur (RIP) selon la revendication 3, **caractérisé en ce que** les points de trame disposés en un carrelage régulier sont disposés selon un angle de trame sélectionné parmi le groupe composé de 0°, 7,5°, 15°, 22,5°, 75°, 45°, 67,5° et 82,5°.

5. Processeur (RIP) selon la revendication 3 ou la revendication 4, **caractérisé en ce que** la multitude de carreaux seuil (TT₁, TT₂,... , TT_{N}) comprend un ensemble de carreaux seuil destiné à générer des images tramées, **caractérisé en ce qu'**au moins une partie de toutes les cellules de trame est un point de trame comprenant:
(i) des pixels d'image disposés sous forme d'un premier cluster ou d'une multitude de clusters représentant ensemble un premier trajet et **caractérisé en ce que** lesdits pixels d'image ont un point d'origine (1003, 2003), et
(ii) des pixels exempts d'image disposés sous forme d'un deuxième cluster ou d'une multitude de clusters représentant ensemble un deuxième trajet.

6. Processeur (RIP) selon la revendication 5, **caractérisé en ce que** ledit premier trajet est une courbe de remplissage d'espace à l'intérieur de ladite cellule de trame.

7. Processeur (RIP) selon la revendication 5, **caractérisé en ce que** ledit premier trajet est une spirale.

8. Processeur (RIP) selon la revendication 3 ou la revendication 4, **caractérisé en ce que** la multitude de carreaux seuil (TT₁, TT₂,... , TT_{N}) comprend un ensemble de carreaux seuil destiné à générer des images tramées, **caractérisé en ce qu'**au moins une partie de toutes les cellules de trame comprend au moins 2 clusters d'image, lesdits clusters d'image étant définis comme des groupes séparés l'un de l'autre et formés de plus de 4 pixels d'image adjacents.

9. Processeur (RIP) selon la revendication 8, **caractérisé en ce que** les cellules de trame de ladite partie présentent une section représentant un quart de la cellule dont la densité d'image relative s'élève à au moins le double de la densité d'image relative représentée par la cellule de trame toute entière.

10. Processeur (RIP) selon la revendication 8 ou la revendication 9, **caractérisé en ce que** la partie comprend au moins 10% de toutes les cellules de trame ayant une densité d'image relative inférieure à 50%.

11. Processeur (RIP) selon la revendication 8 ou la revendication 9, **caractérisé en ce que** la partie comprend au moins 4 clusters d'image.

12. Système de flux de travail pour la prépresse comprenant un processeur d'image tramée selon l'une quelconque des revendications précédentes, **caractérisé en ce que** ledit système de flux de travail pour la prépresse comprend en outre:
- des moyens servant à transmettre l'image tramée à une presse d'impression numérique ou à une unité d'exposition directe de plaques afin d'obtenir une plaque d'impression.

13. Système de flux de travail pour la prépresse selon la revendication 12, **caractérisé en ce que** la plaque d'impression est une plaque d'impression lithographique ou une plaque d'impression flexographique.
